# EUROPEAN PATENT APPLICATION

(11) **EP 4 428 945 A1**
(43) Date of publication of application: **11.09.2024**
(21) Application number: 22939813.6
(22) Date of filing: 24.10.2022
(51) Int. Cl.: H01M 4/139

(54) **WINDING AND UNWINDING SYSTEM, MANAGEMENT AND CONTROL METHOD, CONTROL UNIT AND COMPUTER STORAGE MEDIUM**

(30) Priority: 24.04.2022 CN 202210433472
(71) Applicant: Contemporary Amperex Technology Co., Limited, Ningde, Fujian 352100 (CN)
(72) Inventor: HUANG, Guoda, Ningde, Fujian 352100 (CN); XIE, Chao, Ningde, Fujian 352100 (CN); WANG, Yiruo, Ningde, Fujian 352100 (CN); HU, Shengsheng, Ningde, Fujian 352100 (CN)
(74) Representative: Jacob, Reuben Ellis
(86) International application number: PCT/CN2022/127068
(87) International publication number: WO 2023/206993

(57) **Abstract**

Provided are a winding and unwinding system, a management and control method, a control unit and a computer storage medium. The winding and unwinding system comprises a winding and unwinding box (110), a cooling unit (120) and a control unit (130); the winding and unwinding box (110) comprises a box body (1101) and a box door (1102) which jointly define a box space of the winding and unwinding box (110), an electrode sheet discharge port (1103) provided on the side surface of the box body (1101), a rotating shaft (1104) provided in the middle of the box space, an electrode sheet cylinder (1105) connected to the rotating shaft (1104) and driven by rotation of the rotating shaft (1104) so as to wind and unwind an electrode sheet (1110), and a first temperature sensor (1106) used for monitoring the temperature of the electrode sheet, a first gas detector (1107) used for monitoring the oxygen concentration in the winding and unwinding box (110), an air inlet (1108) provided at the lower part of the box body (1101), and an exhaust port (1109) provided at the upper part of the box body (1101); the cooling unit (120) is communicated with the air inlet (1108); the control unit (130) controls, according to the temperature of the electrode sheet and the oxygen concentration in the winding and unwinding box (110), the cooling unit (120) to adjust the temperature of the electrode sheet and the oxygen concentration in the winding and unwinding box (110), so as to ensure the quality of the electrode sheet and reduce potential safety hazards.

## Description

### CROSS-REFERENCE TO RELATED APPLICATIONS

This application refers to Chinese patent application No. 202210433472.0 entitled "WINDING AND UNWINDING SYSTEM, CONTROL METHOD, CONTROL UNIT, AND COMPUTER STORAGE MEDIUM" filed on April 24, 2022, which is incorporated herein by reference in its entirety.

### TECHNICAL FIELD

This application relates to the field of battery technologies, and in particular, to a winding and unwinding system for electrode plate, a control method for electrode plate, a control unit, and a computer storage medium.

### BACKGROUND

With the rapid development of clean energy and the national policy support to the field of new energy vehicles, lithium batteries with high voltage, high energy density, and long cycle life have attracted significant attention. Due to loss of lithium ions during the formation of the solid electrolyte interface (SEI, Solid Electrolyte Interface) film in lithium batteries, a technique of lithium replenishment for electrode plates from the outside is currently preferred.

However, the electrode plates after lithium replenishment need to undergo a winding or unwinding operation. During the winding or unwinding process of the electrode plates, the replenished lithium is prone to react with air. This reaction generates a large amount of heat and lasts for a long period, resulting in excessively high temperature of the electrode plates, thereby directly affecting quality of the electrode plates and posing significant safety hazards.

### SUMMARY

This application is intended to resolve at least one of the technical problems in the prior art. In view of this, an objective of this application is to provide a winding and unwinding system for electrode plate, a control method for electrode plate, a control unit, and a computer storage medium to alleviate a problem of quality degradation of lithium-replenished electrode plates during the winding and unwinding process.

Embodiments of a first aspect of this application provide a winding and unwinding system for electrode plate, including a winding and unwinding box, a cooling unit, and a control unit, where the winding and unwinding box includes a box body and a box door that jointly define a box space of the winding and unwinding box, an electrode plate discharge port provided on a side of the box body, a rotating shaft provided in the middle of the box space, an electrode plate cylinder connected to the rotating shaft and driven by the rotating shaft to wind or unwind the electrode plate, a first temperature sensor for monitoring temperature of the electrode plate, a first gas detector for monitoring oxygen concentration inside the winding and unwinding box, a gas inlet located at the bottom of the box body, and a gas outlet located at the top of the box body; the cooling unit communicates with the gas inlet; and the control unit controls the cooling unit to regulate the temperature of the electrode plate and the oxygen concentration inside the winding and unwinding box based on the temperature of the electrode plate and the oxygen concentration inside the winding and unwinding box.

In the technical solution of the embodiments of this application, the control unit can regulate the temperature of the electrode plate and the oxygen concentration inside the winding and unwinding box based on the information detected by the temperature sensor and the gas detector, thereby preventing quality degradation of the electrode plates and safety hazards caused by excessively high temperature and oxygen content exceeding normal range during the winding and unwinding process of the electrode plate.

In some embodiments, the first temperature sensor is provided near the electrode plate cylinder, and/or the first gas detector is provided on the top and/or a side of the box body. Placing the first temperature sensor near the electrode plate cylinder enables more accurate monitoring of the temperature of the electrode plate, while placing the first gas detector on the top and/or a side of the box body allows for more accurate monitoring of the oxygen concentration inside the winding and unwinding box.

In some embodiments, the gas inlet includes a first air inlet and a second air supplement inlet. The addition of the air supplement inlet can accelerate the airflow circulation inside the winding and unwinding box when necessary, effectively controlling the quality of the electrode plate and reducing safety hazards.

In some embodiments, the electrode plate further includes a thermal insulation film, and the winding and unwinding box further includes a thermal insulation film discharge port located on a side of the box body. The thermal insulation film assists in dissipating heat from the electrode plate, further ensuring the quality of the electrode plate.

In some embodiments, the winding and unwinding box further includes a pass roller, provided near the electrode plate discharge port and/or the thermal insulation film discharge port, and configured to support and stabilize the electrode plates during the winding or unwinding process. Supporting the electrode plates with the pass roller reduces electrode plate vibration and prevents friction between the electrode plate and the discharge port.

In some embodiments, the winding and unwinding box further includes a fire sprinkler provided on the top of the box body and a fire detector provided on the top of the box body for monitoring flames and/or smoke inside the winding and unwinding box. The winding and unwinding system further includes a fire control unit communicating with the fire sprinkler for fire control in the winding and unwinding box. The addition of the fire control unit ensures timely fire control in case of a fire inside the winding and unwinding box, ensuring safety in the production process.

In some embodiments, the winding and unwinding box may further include an exhaust duct communicating with the winding and unwinding box and provided on the top of the box body and a second gas detector configured to monitor hydrogen concentration inside the winding and unwinding box. The winding and unwinding system further includes a suction unit communicating with the exhaust duct and configured to regulate the hydrogen concentration inside the winding and unwinding box. Controlling the flammable gas hydrogen inside the winding and unwinding box further reduces safety hazards.

In some embodiments, the second gas detector is provided on the top and/or a side of the box body. Placing the second gas detector on the top and/or a side of the box body allows for more accurate monitoring of the hydrogen concentration inside the winding and unwinding box.

In some embodiments, the winding and unwinding box further includes a second temperature sensor for monitoring the temperature inside the winding and unwinding box. Addition of the second temperature sensor allows for monitoring the environmental temperature inside the winding and unwinding box while monitoring the temperature of the electrode plate.

In some embodiments, the second temperature sensor is provided on the top of the box body. Placing the second temperature sensor on the top of the box body enables higher sensitivity to the high environmental temperature inside the winding and unwinding box.

In some embodiments, the first gas detector and the second gas detector each include a detector body disposed outside the winding and unwinding box and a probe inserted inside the winding and unwinding box. Placing the detector body outside the box body reduces damage to detectors from hazardous situations.

Embodiments of a second aspect of this application provide a control method for electrode plate. The control method for electrode plate is applied to the winding and unwinding system in the foregoing embodiments and includes the following steps: when the temperature of the electrode plates is greater than or equal to a first threshold temperature and less than or equal to a second threshold temperature, and the oxygen concentration inside the winding and unwinding box is greater than or equal to a first threshold concentration and less than or equal to a second threshold concentration, controlling the cooling unit to supply a first gas with a temperature lower than the first threshold temperature and an oxygen concentration greater than or equal to the first threshold concentration and less than or equal to the second threshold concentration into the winding and unwinding box, and controlling the gas outlet to open.

When the temperature of the electrode plate is less than the first threshold temperature and the oxygen concentration is between the first threshold concentration and the second threshold concentration, the electrode plate can maintain good quality. In the technical solution of the embodiments of this application, when the temperature of the electrode plate is relatively high, cooling the electrode plate and maintaining the oxygen concentration within an appropriate range can prevent electrode plate degradation.

In some embodiments, the control method for electrode plate further includes: when the temperature of the electrode plate is greater than or equal to the first threshold temperature and less than or equal to the second threshold temperature, and the oxygen concentration inside the winding and unwinding box is less than the first threshold concentration, controlling the cooling unit to supply a second gas with a temperature lower than the first threshold temperature and an oxygen concentration greater than or equal to the first threshold concentration into the winding and unwinding box, and controlling the gas outlet to open. When the temperature of the electrode plate is relatively high and the oxygen concentration is relatively low, cooling the electrode plates while increasing the oxygen concentration can prevent the electrode plate degradation.

In some embodiments, the control method for electrode plate further includes: when the temperature of the electrode plate is greater than or equal to the first threshold temperature and less than or equal to the second threshold temperature, and the oxygen concentration inside the winding and unwinding box is greater than the second threshold concentration, controlling the cooling unit to supply a third gas with a temperature lower than the first threshold temperature and an oxygen concentration less than or equal to the second threshold concentration into the winding and unwinding box, and controlling the gas outlet to open. When the temperature of the electrode plate is relatively high and the oxygen concentration is relatively high, cooling the electrode plate while decreasing the oxygen concentration can prevent the electrode plate degradation.

In some embodiments, the control method for electrode plate further includes: when the temperature of the electrode plate is greater than the second threshold temperature, controlling the cooling unit to deliver a fourth gas with a temperature lower than the first threshold temperature and an oxygen concentration lower than the third threshold concentration into the winding and unwinding box, controlling the gas outlet to open, and issuing a high-temperature shutdown signal. When the temperature of the electrode plate is excessively high, the quality of the electrode plate cannot be guaranteed. Therefore, when the temperature of the electrode plate is excessively high, a shutdown signal is issued to prevent inferior electrode plates from entering the next production process, while cooling the electrode plate and reducing the oxygen concentration to reduce safety hazards.

In some embodiments, the third threshold concentration is lower than the first threshold concentration. When the temperature of the electrode plates is excessively high, there may be a fire situation, demanding quick reduction of the oxygen concentration.

In some embodiments, the control method for electrode plate further includes: when the fire detector detects flames and/or smoke, controlling the fire control unit to supply a fire extinguishing agent into the winding and unwinding box, and issuing a danger shutdown signal. Timely extinguishing the fire in case of a fire occurrence ensures production safety.

In some embodiments, the control method for electrode plate further includes: when the hydrogen concentration inside the winding and unwinding box is greater than or equal to a fourth threshold concentration, controlling the suction unit to exhaust gas from the winding and unwinding box, and issuing a danger shutdown signal. When the concentration of the flammable gas hydrogen is excessively high, continuing the winding and unwinding process poses a significant danger, so it is necessary to promptly issue a shutdown signal and reduce the hydrogen concentration.

In some embodiments, the control method for electrode plate further includes: when the hydrogen concentration inside the winding and unwinding box is greater than or equal to a fifth threshold concentration and less than the fourth threshold concentration, and the temperature inside the box is less than a third threshold temperature, controlling the suction unit to exhaust gas from the winding and unwinding box, controlling the cooling unit to supply a fifth gas with a temperature lower than the third threshold temperature into the winding and unwinding box, and controlling the gas outlet to open. When the hydrogen concentration is relatively high, there is a risk of flammability, so it is necessary to reduce the hydrogen concentration inside the winding and unwinding box.

In some embodiments, the control method for electrode plate further includes: when the hydrogen concentration inside the winding and unwinding box is greater than or equal to the fifth threshold concentration and less than the fourth threshold concentration, and the temperature inside the box is greater than or equal to the third threshold temperature, controlling the suction unit to exhaust gas from the winding and unwinding box, controlling the cooling unit to supply the fifth gas with a temperature lower than the third threshold temperature into the winding and unwinding box, controlling the gas outlet to open, and issuing a danger shutdown signal. When the hydrogen concentration is relatively high and the temperature is excessively high, continuing the winding and unwinding process poses a significant danger, so it is necessary to promptly issue a shutdown signal and reduce the hydrogen concentration and temperature.

Embodiments of a third aspect of this application provide a control unit, including: at least one processor; and a memory communicatively connected to the at least one processor. The memory stores instructions, and when the instructions are executed by the at least one processor, the control method for electrode plate in the foregoing embodiments are implemented.

Embodiments of a fourth aspect of this application provides a computer storage medium, where the computer storage medium stores a program, and when the program is executed by a processor, the control method for electrode plate in the foregoing embodiments are implemented.

The foregoing description is merely an overview of the technical solution of this application. For a better understanding of the technical means in this application such that they can be implemented according to the content of the specification, and to make the above and other objectives, features and advantages of this application more obvious and easier to understand, the following describes specific embodiments of this application.

### BRIEF DESCRIPTION OF DRAWINGS

In the accompanying drawings, unless otherwise specified, the same reference signs in multiple accompanying drawings denote the same or similar components or elements. The accompanying drawings are not necessarily drawn to scale. It should be understood that these accompanying drawings merely illustrate some embodiments disclosed according to this application and should not be considered as limitations on the scope of this application.
FIG. 1 is a schematic block diagram of a winding and unwinding system according to some embodiments of this application;
FIG. 2 is a schematic structural diagram of a winding and unwinding box according to some embodiments of this application;
FIG. 3 is a schematic diagram of an electrode plate coil according to some embodiments of this application;
FIG. 4 is a schematic flowchart of a control method according to some embodiments of this application;
FIG. 5 is a schematic flowchart of a control method according to some embodiments of this application; and
FIG. 6 is a schematic diagram of gas flow in a winding and unwinding box according to some embodiments of this application.

### Description of reference signs:

Winding and unwinding system 100;
winding and unwinding box 110, cooling unit 120, control unit 130, fire control unit 140, suction unit 150;
box body 1101, box door 1102, electrode plate discharge port 1103, rotating shaft 1104, electrode plate cylinder 1105, first temperature sensor 1106, first gas detector 1107, air inlet 1108, air outlet 1109, electrode plate 1110, thermal insulation film discharge port 1111, pass roller 1112, fire sprinkler 1113, fire detector 1114, exhaust duct 1115, second gas detector 1116, second temperature sensor 1117;
first air inlet 1108A, second air supplement inlet 1108B, electrode plate tape 1110A, thermal insulation film 1110B, flame detector 1114A, and smoke alarm 1114B.

### DESCRIPTION OF EMBODIMENTS

The following describes in detail the embodiments of technical solutions of this application with reference to the accompanying drawings. The following embodiments and drawings are merely intended for a clearer description of the technical solutions of this application and therefore are merely used as examples which do not constitute any limitations on the protection scope of this application. The drawings only schematically illustrate the parts related to the technical solution of this application and do not represent the actual structure of the product.

Unless otherwise defined, all technical and scientific terms used herein shall have the same meanings as commonly understood by persons skilled in the art to which this application relates. The terms used herein are intended to merely describe the specific embodiments rather than to limit this application. The terms "include", "comprise", and "have" and any other variations thereof in the specification, claims and brief description of drawings of this application are intended to cover non-exclusive inclusions.

In the description of the embodiments of this application, the terms "first", "second", and the like are merely intended to distinguish between different objects, and shall not be understood as any indication or implication of relative importance or any implicit indication of the number, sequence or primary-secondary relationship of the technical features indicated.

In this specification, reference to "embodiment" means that specific features, structures or characteristics described with reference to the embodiment may be incorporated in at least one embodiment of this application. The word "embodiment" appearing in various places in the specification does not necessarily refer to the same embodiment or an independent or alternative embodiment that is exclusive of other embodiments. It is explicitly or implicitly understood by persons skilled in the art that the embodiments described herein may be combined with other embodiments.

In the description of the embodiments of this application, the term "and/or" is only an associative relationship for describing associated objects, indicating that three relationships may be present. For example, A and/or B may indicate the following three cases: presence of only A, presence of both A and B, and presence of only B. In addition, the character "/" in this specification generally indicates an "or" relationship between contextually associated objects.

In the description of the embodiments of this application, the term "a plurality of" means more than two (inclusive). Similarly, "a plurality of groups" means more than two (inclusive) groups, and "a plurality of pieces" means more than two (inclusive) pieces.

In the description of the embodiments of this application, the orientations or positional relationships indicated by the technical terms "center", "longitudinal" "transverse", "length", "width", "thickness", "upper", "lower", "front", "rear", "left", "right", "vertical", "horizontal", "top", "bottom", "inside", "outside", "clockwise", "counterclockwise", "axial", "radial", "circumferential", and the like are based on the orientations or positional relationships as shown in the accompanying drawings. These terms are merely for ease and brevity of the description of the embodiments of this application rather than indicating or implying that the means or components mentioned must have specific orientations, or must be constructed or manipulated according to specific orientations, and therefore shall not be construed as any limitations on embodiments of this application.

In the description of the embodiments of this application, unless otherwise specified and defined explicitly, the terms "mount", "connect", "join", and "fasten" should be understood in their general senses. For example, they may refer to a fixed connection, a detachable connection, or an integral connection, may refer to a mechanical connection or an electrical connection, and may refer to a direct connection, an indirect connection via an intermediate medium, an internal communication between two elements, or an interaction between two elements. Persons of ordinary skill in the art can understand specific meanings of these terms in this application as appropriate to specific situations.

During an initial charging and discharging process of a lithium-ion battery, a reaction occurs between the electrode material and the electrolyte at the solid-liquid interface, forming a passivation layer covering the surface of the electrode material. This passivation layer has the characteristics of a solid electrolyte and is an insulator of electrons but an excellent conductor of lithium ions. Lithium ions can freely intercalate and deintercalate through this passivation layer, so the passivation layer is called the "solid electrolyte interface (SEI, Solid Electrolyte Interface) film." The formation of the SEI film consumes a portion of lithium ions, so lithium replenishment is commonly performed for the electrode plates to compensate for the consumption of lithium ions during the initial charging and discharging.

The applicant has noticed that during the winding or unwinding process of the electrode plates replenished with lithium, the replenished lithium is prone to react with air. This reaction generates a large amount of heat and lasts for a long period, resulting in excessively high temperature of the electrode plates, thereby affecting quality of the electrode plates and posing safety hazards.

In order to solve the problem of increased temperature of the electrode plates during the winding and unwinding process, the applicant has designed an electrode plate winding and unwinding system, which includes a temperature sensor, a cooling unit, and a control unit. The control unit controls the cooling unit to regulate the temperature inside the winding and unwinding box based on a sensing result of the temperature sensor.

In addition, the applicant has also noticed that after the reaction between the replenished lithium and air, oxygen content inside the winding and unwinding box changes accordingly. When the oxygen content inside the winding and unwinding box is not within a specific range, it can lead to reactions that degrade the quality of the electrode plate.

Based on the above considerations, in order to solve the problem of electrode plate quality degradation during the winding and unwinding process, the applicant has conducted research and found that a gas detector can be provided in the winding and unwinding system to monitor the oxygen concentration in real-time. The control unit controls the cooling unit to regulate the oxygen concentration inside the winding and unwinding box based on a detection result of the gas detector.

In such winding and unwinding system, the temperature and oxygen concentration are regulated, thereby effectively alleviating the degradation of the electrode plate during the winding and unwinding process.

For ease of description, a winding and unwinding system 100 of an embodiment of the application is used as an example for description of the following embodiments.

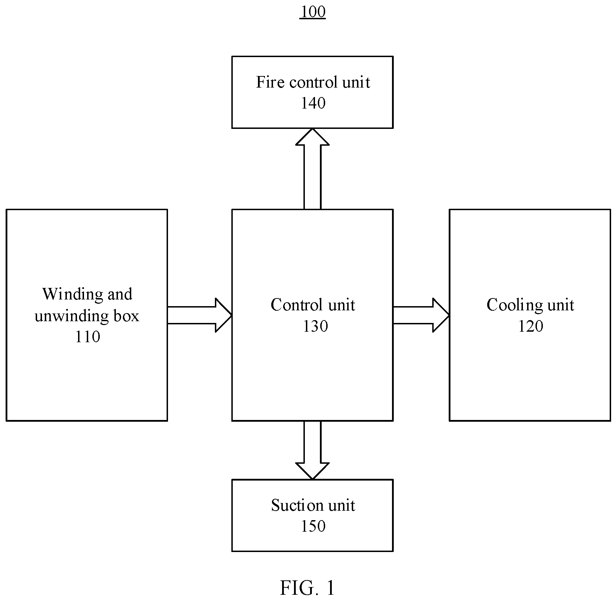

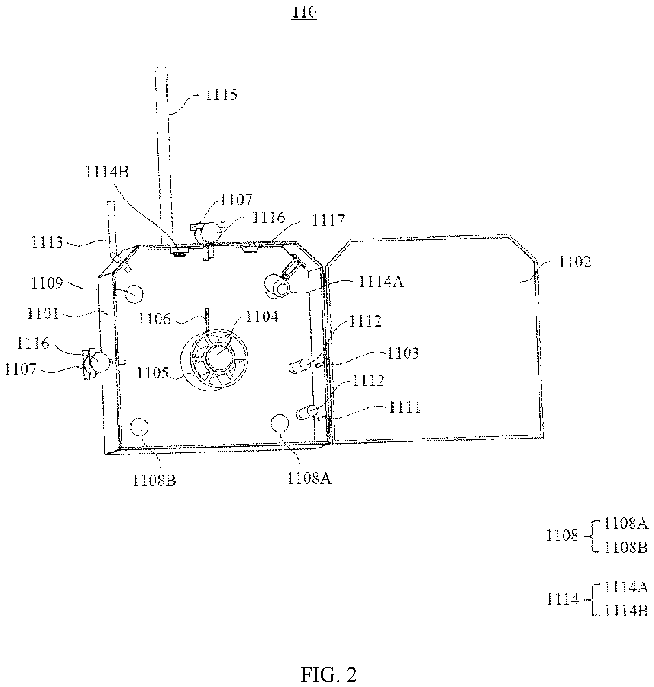

FIG. 1 is a schematic block diagram of a winding and unwinding system 100 according to some embodiments of this application. FIG. 2 is a schematic structural diagram of a winding and unwinding box 110 according to some embodiments of this application. Referring to FIG. 1 and FIG. 2, some embodiments of this application provide a winding and unwinding system 100, including: a winding and unwinding box 110, a cooling unit 120, and a control unit 130. The winding and unwinding box 110 includes a box body 1101 and a box door 1102 that jointly define the box space of the winding and unwinding box 110, an electrode plate discharge port 1103 provided on a side of the box body 1101, a rotating shaft 1104 provided in the center of the box space, an electrode plate cylinder 1105 that is connected to and driven by the rotating shaft 1104 to wind and unwind the electrode plates, a first temperature sensor 1106 configured to monitor a temperature of the electrode plate, a first gas detector 1107 configured to monitor oxygen concentration inside the winding and unwinding box 110, a gas inlet 1108 provided at the bottom of the box body 1101, and a gas outlet 1109 located at the top of the box body 1101. The cooling unit 120 communicates with the gas inlet 1108. The control unit 130 controls the cooling unit 120 to regulate the temperature of the electrode plate and the oxygen concentration inside the winding and unwinding box 110 based on the temperature of the electrode plate and the oxygen concentration inside the winding and unwinding box 110.

For clarity and ease of understanding, reference to FIG. 2 is made to explain components included in the winding and unwinding box 110. However, a shape, position, and quantity of the components included in the winding and unwinding box 110 are not limited to those shown in FIG. 2, but can be adjusted based on an actual need. For example, shapes of the box body 1101 and the box door 1102 are not limited to the shapes shown in FIG. 2, but can be any shape that facilitates accommodating the electrode plate coil. The position of the electrode plate discharge port 1103 is not limited to the specific position shown in FIG. 2, but can be adjusted according to the specific process flow, and so on.

The electrode plate can enter the winding and unwinding box 110 from the outside through the electrode plate discharge port 1103 and connect to the electrode plate cylinder 1105. The electrode plate cylinder 1105 can be engaged with and connected to the rotating shaft 1104, and the rotating shaft 1104 can be driven to rotate by an external driving apparatus, thereby rotating the electrode plate cylinder 1105 to wind or unwind the electrode plate.

The first temperature sensor 1106, the first gas detector 1107, the gas inlet 1108, and the gas outlet 1109 may be provided as one or more, and may be provided at different locations of the box body 1101. The first temperature sensor 1106 may be a contact or non-contact sensor. The first temperature sensor 1106 may be a resistance sensor composed of a thermistor and an amplification circuit. The first temperature sensor 1106 can be configured to monitor the temperature of the electrode plates in real-time and promptly send the detected temperature value to the control unit 130. The first gas detector 1107 can be configured to monitor the oxygen concentration inside the winding and unwinding box 110 in real-time and promptly send the detected concentration value to the control unit 130. The cooling unit 120 may be a gas cooling apparatus that delivers gases with different temperatures and oxygen concentrations into the winding and unwinding box 110 via the gas inlet 1108 to regulate the environment inside the winding and unwinding box 110.

As described above, when the temperature of the electrode plates is excessively high, the quality of the electrode plate degrades and safety hazards arise. When the oxygen concentration inside the winding and unwinding box 110 is not within an appropriate range, uncontrolled reactions may occur in the electrode plate. However, because the winding and unwinding system 100 according to some embodiments of this application can control the temperature of the electrode plates and the oxygen concentration inside the winding and unwinding box 110, it is possible to avoid the electrode plate degradation due to excessively high temperature and oxygen concentration exceeding normal range during the winding and unwinding process, and reduce safety hazards in the production process.

According to some embodiments of this application, the first temperature sensor 1106 may be provided near the electrode plate cylinder 1105, and/or the first gas detector 1107 may be provided on the top and/or a side of the box body 1101.

When the first gas detector 1107 is provided on the top and a side of the box body 1101, the first gas detector 1107 can send a maximum value and/or an average value of the detected oxygen concentration to the control unit 130.

Placing the first temperature sensor 1106 near the electrode plate cylinder 1105 allows for more accurate monitoring of the temperature of the electrode plate. The first gas detector 1107 monitors the oxygen concentration from different locations, which enables obtaining a more accurate average oxygen concentration inside the winding and unwinding box 110 and facilitates detection of the maximum oxygen concentration.

According to some embodiments of this application, the gas inlet 1108 may include a first air inlet 1108A and a second air supplement inlet 1108B.

The first air inlet 1108A and the second air supplement inlet 1108B may be respectively provided on the two sides of lower part of the box body 1101.

Air intake can be increased through the second air supplement inlet 1108B when necessary, so as to accelerate the regulation of gas environment and temperature inside the winding and unwinding box 110.

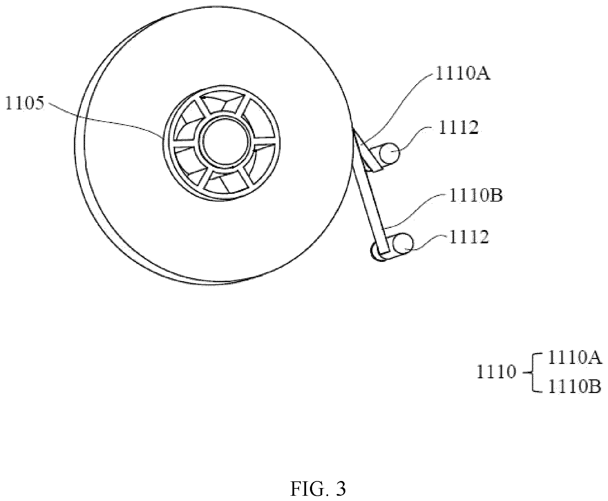

FIG. 3 is a schematic diagram of an electrode plate coil according to some embodiments of this application. Referring to FIG. 2 and FIG. 3, according to some embodiments of this application, the electrode plate 1110 may further include a thermal insulation film 1110B, and the winding and unwinding box 110 may further include a thermal insulation film discharge port 1111 provided on a side of the box body 1101.

The electrode plate 1110 may include an electrode plate tape 1110A and the thermal insulation film 1110B. The electrode plate tape 1110A may include an anode active material or a cathode active material. The thermal insulation film 1110B may include a polycarbonate (PC) material. When the electrode plate 1110 does not include the thermal insulation film 1110B, the thermal insulation film discharge port 1111 can be closed to ensure sealing performance of the winding and unwinding box 110.

The thermal insulation film 1110B can accelerate the heat dissipation of the electrode plate 1110 to better ensure the quality of the electrode plate.

Still referring to FIG. 2, according to some embodiments of this application, the winding and unwinding box 110 may further include a pass roller 1112 provided near the electrode plate discharge port 1103 and/or the thermal insulation film discharge port 1111, configured to support and stabilize the electrode plate during the winding or unwinding process.

Supporting the electrode plate with the pass roller 1112 can reduce vibration, prevent the electrode plates from rubbing against the electrode plate discharge port 1103 and/or the thermal insulation film discharge port 1111, which may damage the electrode plate and generate heat on the electrode plate.

According to some embodiments of this application, the winding and unwinding box 110 may further include a fire sprinkler 1113 provided on the top of the box body 1101 and a fire detector 1114 provided on the top of the box body 1101 for monitoring flames and/or smoke inside the winding and unwinding box 110. The winding and unwinding system 100 may further include a fire control unit 140 communicating with the fire sprinkler 1113 for fire control in the winding and unwinding box 110.

The fire detector 1114 may include a flame detector 1114A configured to detect flames and/or a smoke alarm 1114B configured to detect smoke. The flame detector 1114A may be an infrared flame detector or an infrared-ultraviolet-combined detector.

In case of a fire inside the winding and unwinding box 110, the fire control unit 140 can be used for timely fire control, ensuring production safety.

According to some embodiments of this application, the winding and unwinding box 110 may further include an exhaust duct 1115 communicating with the winding and unwinding box 110 and provided on the top of the box body 1101 and a second gas detector 1116 configured to monitor hydrogen concentration inside the winding and unwinding box 110. The winding and unwinding system 100 may further include a suction unit 150 communicating with the exhaust duct 1115 and configured to regulate the hydrogen concentration inside the winding and unwinding box 110.

The second gas detector 1116 may be provided as one or more and provided at different locations of the box body 1101. The second gas detector 1116 may be configured to monitor the hydrogen concentration inside the winding and unwinding box 110 in real-time and promptly send the detected concentration value to the control unit 130. The suction unit 150 can exhaust gas from the winding and unwinding box 110 through the exhaust duct 1115 to regulate gas environment inside the winding and unwinding box 110.

During the winding and unwinding process, the electrode plate reacts with the air and generates flammable gas hydrogen. The suction unit 150 controls the hydrogen concentration inside the winding and unwinding box 110 to further reduce safety hazards.

According to some embodiments of this application, the second gas detector 1116 can be provided on the top and/or a side of the box body 1101.

When the second gas detector 1116 is provided on the top and a side of the box body 1101, the second gas detector 1116 can send a maximum value and/or an average value of the detected hydrogen concentration to the control unit 130.

The second gas detector 1116 monitors the hydrogen concentration from different locations, which enables obtaining a more accurate average hydrogen concentration inside the winding and unwinding box 110 and facilitates detection of the maximum hydrogen concentration.

According to some embodiments of this application, the winding and unwinding box 110 may further include a second temperature sensor 1117 configured to monitor the temperature inside the winding and unwinding box 110.

The second temperature sensor 1117 may be a non-contact sensor. The second temperature sensor 1117 may be a resistance sensor composed of a thermistor and an amplification circuit. The second temperature sensor 1117 may be configured to monitor the temperature inside the winding and unwinding box 110 in real-time and promptly send the detected temperature value to the control unit 130.

Monitoring the temperature inside the winding and unwinding box 110 while monitoring the temperature of the electrode plate with the second temperature sensor 1117 can more effectively control high temperatures.

According to some embodiments of this application, the second temperature sensor 1117 may be provided on the top of the box body 1101.

Placing the second temperature sensor 1117 on the top of the box body 1101 facilitates detecting the maximum temperature inside the winding and unwinding box 110.

According to some embodiments of this application, the first gas detector 1107 and the second gas detector 1116 may each include a detector body disposed outside the winding and unwinding box 110 and a probe inserted inside the winding and unwinding box 110.

Placing the detector body outside the winding and unwinding box 110 reduces the risk of damage to the detector body in high-temperature or hazardous situations such as fire.

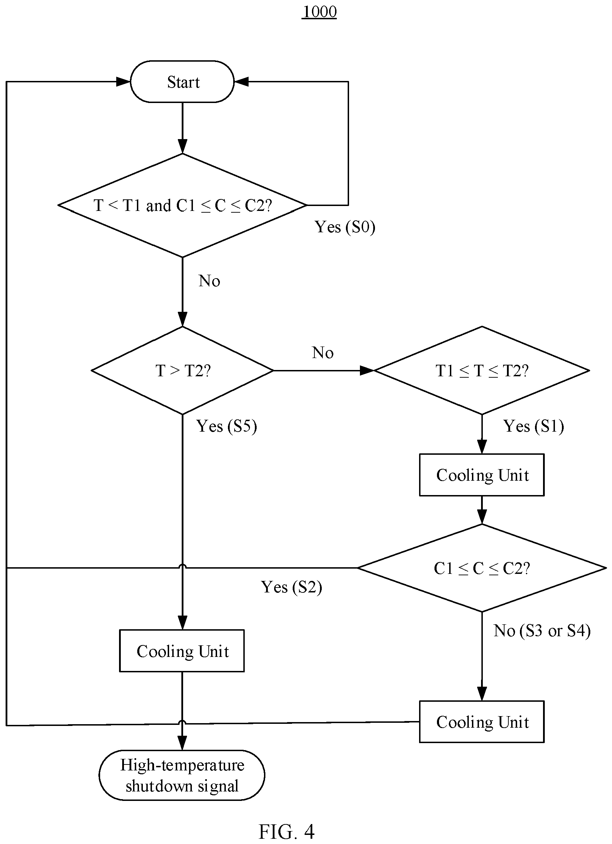

FIG. 4 is a schematic flowchart of a control method 1000 according to some embodiments of this application. Referring to FIG. 4, some embodiments of this application provides an electrode plate control method 1000, applicable to the winding and unwinding system 100 in the foregoing embodiments, including: when electrode plate temperature T is greater than or equal to a first threshold temperature T1 and less than or equal to a second threshold temperature T2 (S 1), and oxygen concentration C inside the winding and unwinding box 110 is greater than or equal to a first threshold concentration C1 and less than or equal to a second threshold concentration C2 (S2), controlling the cooling unit 120 to deliver a first gas with a temperature lower than the first threshold temperature T1 and an oxygen concentration C greater than or equal to the first threshold concentration C1 and less than or equal to the second threshold concentration C2 into the winding and unwinding box 110, and controlling the gas outlet 1109 to open.

When the electrode plate temperature T is below the first threshold temperature T1, and the oxygen concentration C inside the winding and unwinding box 110 is between the first threshold concentration C1 and the second threshold concentration C2 (S0), the electrode plate can maintain good quality. The first threshold temperature T1 may be in the range of 40°C to 50°C. The second threshold temperature T2, for example, may be 70°C. The first threshold concentration C1 may be in the range of 13% to 43%. The second threshold concentration C2 may be in the range of 30% to 60%.

When the electrode plate temperature T is slightly high, cooling the electrode plates while maintaining the oxygen concentration C inside the winding and unwinding box 110 within an appropriate range can prevent the electrode plate degradation.

According to some embodiments of this application, the control method 1000 may further include: when the electrode plate temperature T is greater than or equal to the first threshold temperature T1 and less than or equal to the second threshold temperature T2 (S 1), and the oxygen concentration C inside the winding and unwinding box 110 is less than the first threshold concentration C1 (S3), controlling the cooling unit 120 to deliver second gas with a temperature lower than the first threshold temperature T1 and an oxygen concentration greater than or equal to the first threshold concentration C1 into the winding and unwinding box 110, and controlling the gas outlet 1109 to open.

When the electrode plate temperature T is slightly high and the oxygen concentration C inside the winding and unwinding box 110 is relatively low, cooling the electrode plates while increasing the oxygen concentration can prevent the electrode plate degradation.

According to some embodiments of this application, the control method 1000 may further include: when the electrode plate temperature T is greater than or equal to the first threshold temperature T1 and less than or equal to the second threshold temperature T2 (S 1), and the oxygen concentration C inside the winding and unwinding box 110 is greater than the second threshold concentration C2 (S4), controlling the cooling unit 120 to deliver third gas with a temperature lower than the first threshold temperature T1 and an oxygen concentration less than or equal to the second threshold concentration C2 into the winding and unwinding box 110, and controlling the gas outlet 1109 to open.

When the electrode plate temperature T is slightly high and the oxygen concentration C inside the winding and unwinding box 110 is relatively high, cooling the electrode plates while decreasing the oxygen concentration can prevent the electrode plate degradation.

According to some embodiments of this application, the control method 1000 may further include: when the electrode plate temperature T is greater than the second threshold temperature T2 (S5), controlling the cooling unit 120 to deliver a fourth gas with a temperature lower than the first threshold temperature T1 and an oxygen concentration lower than the third threshold concentration into the winding and unwinding box 110, controlling the gas outlet 1109 to open, and issuing a high-temperature shutdown signal.

When the electrode plate temperature T is excessively high, the quality of the electrode plates is severely compromised. Cooling the electrode plate and reducing the oxygen concentration inside the winding and unwinding box 110 can prevent safety hazards caused by high temperatures. Issuing the high-temperature shutdown signal prevents inferior electrode plates from entering the next production process.

According to some embodiments of this application, the third threshold concentration may be lower than the first threshold concentration C1.

When the electrode plate temperature T is excessively high, the risk of fire increases significantly. Therefore, it is necessary to rapidly reduce the oxygen concentration C inside the winding and unwinding box 110 to eliminate safety hazards.

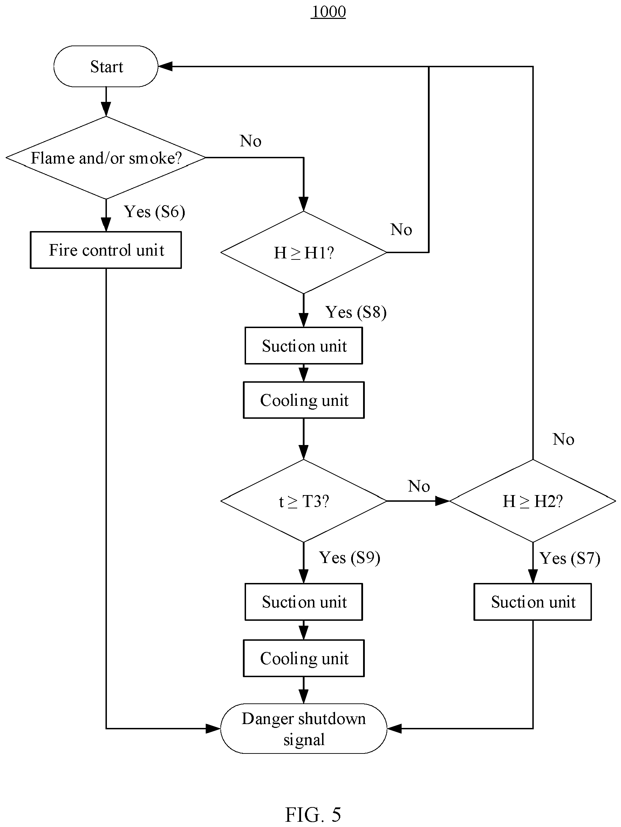

FIG. 5 is a schematic flowchart of a control method 1000 according to some embodiments of this application. Referring to FIG. 5, according to some embodiments of this application, the control method 1000 may further include: when the fire detector 1114 detects flames and/or smoke (S6), controlling the fire control unit 140 to deliver a fire extinguishing agent into the winding and unwinding box 110 and issuing a danger shutdown signal.

The fire extinguishing agent may be a non-aqueous fire extinguishing agent.

Timely extinguishing the fire in case of a fire occurrence ensures production safety.

According to some embodiments of this application, the control method 1000 may further include: when the hydrogen concentration H inside the winding and unwinding box 110 is greater than or equal to a fourth threshold concentration H2 (S7), controlling the suction unit 150 to extract gas from the winding and unwinding box 110 and issuing a danger shutdown signal.

The fourth threshold concentration H2 may be in a range of 5% to 10%.

When the concentration of the flammable gas hydrogen is excessively high, there is a significant risk of explosion. Therefore, it is necessary to rapidly reduce the hydrogen concentration H inside the winding and unwinding box 110 and promptly shut down the system.

According to some embodiments of this application, the control method 1000 may further include: when the hydrogen concentration H inside the box is greater than or equal to a fifth threshold concentration H1 and less than the fourth threshold concentration H2, and the temperature t inside the winding and unwinding box 110 is less than a third threshold temperature T3 (S8), controlling the suction unit 150 to exhaust gas from the winding and unwinding box 110, controlling the cooling unit 120 to deliver a fifth gas with a temperature lower than the third threshold temperature T3 into the winding and unwinding box 110, and controlling the gas outlet 1109 to open.

The fifth threshold concentration H1 may be in the range of 2% to 5%. The third threshold temperature T3 may be 75°C or higher.

When the concentration of the flammable gas hydrogen is relatively high, it is necessary to reduce the hydrogen concentration H inside the winding and unwinding box 110 and lower the temperature t inside the winding and unwinding box 110 to eliminate safety hazards.

According to some embodiments of this application, the control method 1000 can further include: when the hydrogen concentration H inside the winding and unwinding box 110 is greater than or equal to a fifth threshold concentration H1 and less than the fourth threshold concentration H2, and the temperature t inside the winding and unwinding box 110 is greater than or equal to a third threshold temperature T3 (S9), controlling the suction unit 150 to exhaust gas from the winding and unwinding box 110, controlling the cooling unit 120 to deliver a fifth gas with a temperature lower than the third threshold temperature T3 into the winding and unwinding box 110, controlling the gas outlet 1109 to open, and issuing a danger shutdown signal.

When the concentration of the flammable gas hydrogen is relatively high and the temperature t inside the winding and unwinding box 110 is excessively high, there is a significant risk of explosion. Therefore, it is necessary to rapidly reduce the hydrogen concentration H inside the winding and unwinding box 110, lower the temperature, and promptly shut down the system.

Referring to FIG. 2, in a specific embodiment, the winding and unwinding box 110 may include: a box body 1101 and a box door 1102 that jointly define a substantially rectangular box space, a slit-shaped electrode plate discharge port 1103 and a thermal insulation film discharge port 1111 that are provided on a side of the box body 1101, a pass roller 1112 provided near the electrode plate discharge port 1103 and the thermal insulation film discharge port 1111, a first air inlet 1108A and a second air supplement inlet 1108B respectively provided on the lower sides of the lower part of the box body 1101, a gas outlet 1109 provided on a side of the upper part of the box body 1101, a rotating shaft 1104 provided in the center of the box space, an electrode plate cylinder 1105 connected to and driven by the rotating shaft 1104, a first temperature sensor 1106 provided near the electrode plate cylinder 1105 for monitoring the temperature of the electrode plate, a second temperature sensor 1117 provided on the top of the box body 1101 for monitoring the temperature inside the winding and unwinding box 110, a first gas detector 1107 provided on the top and a side of the box body 1101 for monitoring the oxygen concentration inside the winding and unwinding box 110, a second gas detector 1116 provided on the top and a side of the box body 1101 for monitoring the hydrogen concentration inside the winding and unwinding box 110, a flame detector 1114A provided on the top of the box body 1101 for detecting flames, a smoke alarm 1114B provided on the top of the box body 1101 for detecting smoke, a fire sprinkler 1113 provided on the top of the box body 1101, and an exhaust duct 1115 provided on the top of the box body 1101.

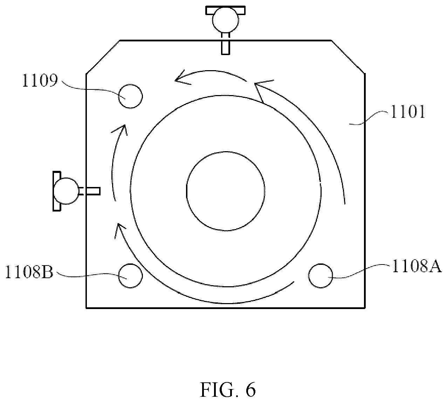

FIG. 6 is a schematic diagram of gas flow in a winding and unwinding box 110 according to some embodiments of this application. Referring to FIG. 6, when the airflow enters through the first air inlet 1108A and/or the second air supplement inlet 1108B and exits through the gas outlet 1109, an airflow pattern as indicated by the arrows in FIG. 6 may be formed inside the winding and unwinding box 110 to regulate the temperature and gas concentration in the winding and unwinding box 110.

The cooling unit 120 may communicate with the first air inlet 1108A and/or the second air supplement inlet 1108B, the fire control unit 140 may communicate with the fire sprinkler 1113, and the suction unit 150 may communicate with the exhaust duct 1115. The control unit 130 can control the cooling unit 120, the fire control unit 140, and/or the suction unit 150 to implement the control method for electrode plate 1000 of any of the foregoing embodiments.

Some embodiments of this application provide a control unit 130, including: at least one processor; and a memory communicatively connected to the at least one processor. The memory stores instructions, and when the instructions are executed by the at least one processor, the control method for electrode plate 1000 of any of the foregoing embodiments is implemented.

Some embodiments of this application provide a computer storage medium, where the computer storage medium stores a program, and when the program is executed by a processor, the control method for electrode plate 1000 of any of the foregoing embodiments is implemented.

In conclusion, it should be noted that the above embodiments are merely intended for describing the technical solutions of this application but not for limiting this application. Although this application is described in detail with reference to the foregoing embodiments, persons of ordinary skill in the art should understand that they may still make modifications to the technical solutions described in the foregoing embodiments or make equivalent replacements to some or all technical features thereof without departing from the scope of the technical solutions of the embodiments of this application. They should all be covered in the scope of the claims and specification of this application. In particular, as long as there is no structural conflict, the various technical features mentioned in the embodiments can be combined in any manner. This application is not limited to the specific embodiments disclosed in this specification but includes all technical solutions falling within the scope of the claims.

## Claims

1. A winding and unwinding system for electrode plate, comprising a winding and unwinding box, a cooling unit, and a control unit, wherein the winding and unwinding box comprises a box body and a box door that jointly define a box space of the winding and unwinding box, an electrode plate discharge port provided on a side of the box body, a rotating shaft provided in the middle of the box space, an electrode plate cylinder connected to the rotating shaft and driven by the rotating shaft to wind or unwind the electrode plate, a first temperature sensor for monitoring temperature of the electrode plate, a first gas detector for monitoring oxygen concentration inside the winding and unwinding box, a gas inlet located at the bottom of the box body, and a gas outlet located at the top of the box body; the cooling unit communicates with the gas inlet; and the control unit controls the cooling unit to regulate the temperature of the electrode plate and the oxygen concentration inside the winding and unwinding box based on the temperature of the electrode plate and the oxygen concentration inside the winding and unwinding box.

2. The winding and unwinding system according to claim 1, wherein the first temperature sensor is provided near the electrode plate cylinder, and/or the first gas detector is provided on the top and/or a side of the box body.

3. The winding and unwinding system according to claim 1 or 2, wherein the gas inlet comprises a first air inlet and a second air supplement inlet.

4. The winding and unwinding system according to any one of claims 1 to 3, wherein the electrode plate further comprises a thermal insulation film, and the winding and unwinding box further comprises a thermal insulation film discharge port provided on a side of the box body.

5. The winding and unwinding system according to claim 4, wherein the winding and unwinding box further comprises:
a pass roller, provided near the electrode plate discharge port and/or the thermal insulation film discharge port, configured to support and stabilize the electrode plate during winding or unwinding.

6. The winding and unwinding system according to any one of claims 1 to 5, wherein the winding and unwinding box further comprises:
a fire sprinkler, provided on the top of the box body; and
a fire detector, provided on the top of the box body, configured to monitor flames and/or smoke inside the winding and unwinding box, wherein
the winding and unwinding system further comprises:
a fire control unit, communicating with the fire sprinkler, configured for fire control of the winding and unwinding box.

7. The winding and unwinding system according to any one of claims 1 to 6, wherein the winding and unwinding box further comprises:
an exhaust duct, provided on the top of the box body and communicating with the winding and unwinding box; and
a second gas detector configured to monitor hydrogen concentration inside the winding and unwinding box, wherein
the winding and unwinding system further comprises:
a suction unit communicating with the exhaust duct for regulating the hydrogen concentration inside the winding and unwinding box.

8. The winding and unwinding system according to claim 7, wherein the second gas detector is provided on the top and/or a side of the box body.

9. The winding and unwinding system according to any one of claims 1 to 8, wherein the winding and unwinding box further comprises:
a second temperature sensor configured to monitor temperature inside the winding and unwinding box.

10. The winding and unwinding system according to claim 9, wherein the second temperature sensor is provided on the top of the box body.

11. The winding and unwinding system according to claim 7, wherein the first gas detector and the second gas detector each comprises a detector body disposed outside the winding and unwinding box and a probe inserted inside the winding and unwinding box.

12. A control method for electrode plate, applied to the winding and unwinding system according to any one of claims 1 to 11, wherein the control method comprises: when the temperature of the electrode plate is greater than or equal to a first threshold temperature and less than or equal to a second threshold temperature, and oxygen concentration inside the winding and unwinding box is greater than or equal to a first threshold concentration and less than or equal to a second threshold concentration, controlling the cooling unit to supply a first gas with a temperature lower than the first threshold temperature and an oxygen concentration greater than or equal to the first threshold concentration and less than or equal to the second threshold concentration into the winding and unwinding box, and controlling the gas outlet to open.

13. The control method according to claim 12, wherein the control method further comprises:
when the temperature of the electrode plate is greater than or equal to the first threshold temperature and less than or equal to the second threshold temperature, and the oxygen concentration inside the winding and unwinding box is less than the first threshold concentration, controlling the cooling unit to supply a second gas with a temperature lower than the first threshold temperature and an oxygen concentration greater than or equal to the first threshold concentration into the winding and unwinding box, and controlling the gas outlet to open.

14. The control method according to claim 12 or 13, wherein the control method further comprises:
when the temperature of the electrode plate is greater than or equal to the first threshold temperature and less than or equal to the second threshold temperature, and the oxygen concentration inside the winding and unwinding box is greater than the second threshold concentration, controlling the cooling unit to supply a third gas with a temperature lower than the first threshold temperature and an oxygen concentration less than or equal to the second threshold concentration into the winding and unwinding box, and controlling the gas outlet to open.

15. The control method according to any one of claims 12 to 14, wherein the control method further comprises:
when the temperature of the electrode plate is greater than the second threshold temperature, controlling the cooling unit to supply a fourth gas with a temperature lower than the first threshold temperature and an oxygen concentration less than a third threshold concentration into the winding and unwinding box, controlling the gas outlet to open, and issuing a high-temperature shutdown signal.

16. The control method according to claim 15, wherein the third threshold concentration is less than the first threshold concentration.

17. The control method according to any one of claims 12 to 16, applied to the winding and unwinding system according to claim 6, wherein the control method further comprises: when the fire detector detects flames and/or smoke, controlling the fire control unit to supply a fire extinguishing agent into the winding and unwinding box, and issuing a danger shutdown signal.

18. The control method according to any one of claims 12 to 17, applied to the winding and unwinding system according to any one of claims 7, 8, and 11, wherein the control method further comprises: when the hydrogen concentration inside the winding and unwinding box is greater than or equal to a fourth threshold concentration, controlling the suction unit to exhaust gas from the winding and unwinding box, and issuing a danger shutdown signal.

19. The control method according to claim 18, wherein the control method further comprises: when the hydrogen concentration inside the winding and unwinding box is greater than or equal to a fifth threshold concentration and less than the fourth threshold concentration, and the temperature inside the box is less than the third threshold temperature, controlling the suction unit to exhaust gas from the winding and unwinding box, controlling the cooling unit to supply a fifth gas with a temperature lower than the third threshold temperature into the winding and unwinding box, and controlling the gas outlet to open.

20. The control method according to claim 19, wherein the control method further comprises:
when the hydrogen concentration inside the winding and unwinding box is greater than or equal to the fifth threshold concentration and less than the fourth threshold concentration, and the temperature inside the box is greater than or equal to the third threshold temperature, controlling the suction unit to exhaust gas from the winding and unwinding box, controlling the cooling unit to supply the fifth gas with a temperature lower than the third threshold temperature into the winding and unwinding box, controlling the gas outlet to open, and issuing a danger shutdown signal.

21. A control unit comprising:
at least one processor; and
a memory communicatively connected to the at least one processor, wherein
the memory stores instructions, and when the instructions are executed by the at least one processor, the control method for electrode plate according to any one of claims 12 to 20 is implemented.

22. A computer storage medium, wherein the computer storage medium stores a program, and when the program is executed by a processor, the control method for electrode plate according to any one of claims 12 to 20 is implemented.
